# EUROPEAN PATENT APPLICATION

(11) **EP 2 116 559 A1**
(43) Date of publication of application: **11.11.2009**
(21) Application number: 08712060.6
(22) Date of filing: 27.02.2008
(51) Int. Cl.: C08G 18/18, C08G 18/00, C08G 101/00

(54) **CATALYST COMPOSITION FOR PRODUCTION OF FLEXIBLE POLYURETHANE FOAM**

(30) Priority: 27.02.2007 JP 2007047190
(71) Applicant: Tosoh Corporation, Yamaguchi 746-8501 (JP)
(72) Inventor: TOKUMOTO, Katsumi, Shunan-shi Yamaguchi 746-0044 (JP); TAMANO, Yutaka, Shunan-shi Yamaguchi 746-0081 (JP)
(74) Representative: Kügele, Bernhard
(86) International application number: PCT/JP2008/053438
(87) International publication number: WO 2008/108250

(57) **Abstract**

To provide a catalyst composition for production of a flexible or semirigid polyurethane foam excellent in air permeability, and a method for producing a polyurethane foam by using it.

A catalyst composition for production of a flexible polyurethane foam, which comprises (A) an amine compound of the following formula (1), and (B) an amine compound of the following formula (2) and/or the following formula (3), wherein the weight ratio of (A)/(B) is within a range of from 95/5 to 5/95: 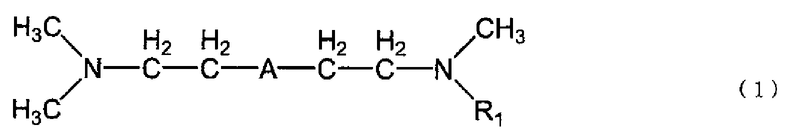 in the above formula (1), A is an oxygen atom or a nitrogen atom to which one methyl group is bonded, and R₁ is a methyl group or a hydroxyethyl group; 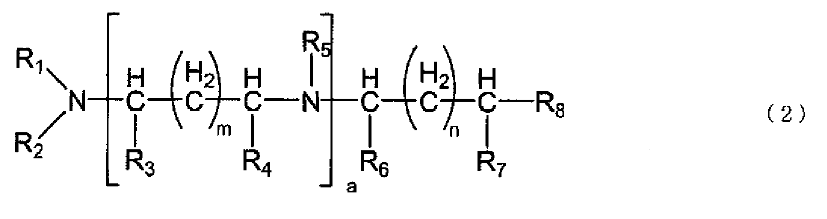 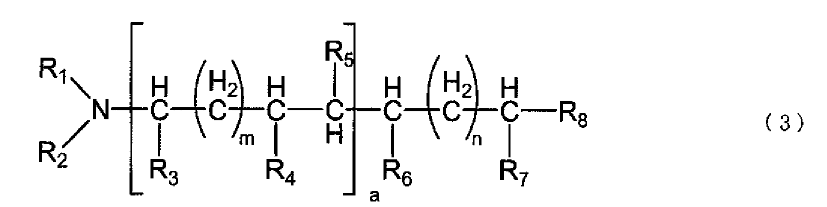 in the above formulae (2) and (3), each of R₁, R₂, R₃, R₄, R₅, R₆ and R₇ which are independent of one another, is a hydrogen atom or a C₁₋₆ saturated or unsaturated hydrocarbon group, R₈ is a hydrogen atom, a methyl group, a methoxy group, a hydroxyl group, an amino group, a monomethylamino group, a monoethylamino group or a dimethylamino group, a is an integer of from 1 to 4, and each of m and n which are independent of each other, is an integer of from 0 to 4, provided that whenone or more substituents selected from R₁, R₂ and R₅ are not hydrogen atoms, R₈ is an amino group, a monomethylamino group or a monoethylamino group, and any two substituents of from R₁ to R₈ may be optionally bonded via a carbon atom, an oxygen atom or a nitrogen atom to form a hetero ring.

## Description

### TECHNICAL FIELD

The present invention relates to a novel catalyst composition for production of a flexible or semirigid polyurethane foam having improved air-permeability (in the present invention, such a polyurethane foam will be generally referred to as a flexible polyurethane foam except for Examples), and a method for producing a flexible polyurethane foam by using it.

### BACKGROUND ART

Flexible polyurethane foams are used for various applications, for example, as foam pads to be used for interior materials such as seat cushions, head rests, etc. for automobiles, as well as for office/household chairs, sofas, beds, mattresses, carpet backing, sound insulating materials, etc. A flexible polyurethane foam is required to have high air permeability by an open cell structure in order to secure good cushion properties and excellent sound absorbing properties. Further, in the production of a flexible polyurethane foam, it is required to bring cells of the polyurethane foam to be an open state by using some means. In the case of a flexible polyurethane foam wherein the cells are not in an open state, when the temperature is lower than during its production, gas trapped in the cells will shrink, whereby the polyurethane foam undergoes shrinkage or deformation. In many cases, the cells will not naturally be in an open state at the time of producing a flexible polyurethane foam. Accordingly, in order to accomplish high air permeability, it is required to promote the open state of cells by adopting a means of using an additive to present a cell-opening effect in the blend for a polyurethane foam, or a means of a mechanical crushing or crushing by means of vacuum.

A flexible polyurethane foam is produced by reacting a polyol with an organic polyisocyanate in the presence of a catalyst and, if necessary, a blowing agent, a surfactant, a cross linking agent, etc. Heretofore, it has been known to use many metal compounds or tertiary amine compounds as catalysts for the production of polyurethane foams. Such catalysts are commonly used industrially as being used alone or in combination. In order to produce a flexible polyurethane foam without defects, it becomes very important to select a proper catalyst. If preference is given too much to the reaction of the polyol with the isocyanate (the gelling reaction) or the reaction of water with the isocyanate (the blowing reaction), closed cells will be formed, whereby as the internal temperature decreases, the internal pressure of the cells will decrease, and the skeletal structure becomes not durable against external pressure, and the polyurethane foam will undergo a shrinkage phenomenon. As a catalyst to be used for the production of a flexible polyurethane foam, an organic tin compound or a tertiary amine compound may be mentioned. The organic tin compound is a catalyst to promote the gelling reaction.

On the other hand, the tertiary amine compound has a different degree of influence over the gelling reaction and the blowing reaction depending upon the difference in the molecular structure. Among tertiary amine compounds, a typical gelling catalyst may be triethylenediamine, and a typical blowing catalyst may be 1,1,4,7,7-pentamethyldiethylenetriamine, bis(2-dimethylaminoethyl)ether or 2-(2-(2-dimethylaminoethoxy)-ethylmethylamino)-ethanol. It is known that when the blowing catalyst is increased to increase its utilization ratio to the gelling catalyst, the air permeability will be increased.

As a method to improve air permeability of a flexible polyurethane foam, a method has been proposed wherein a catalyst composition comprising pentamethyldiethylenetriamine and bis(dimethylaminopropyl)methylamine is used to obtain a polyurethane foam having the air permeability improved (i.e. Patent Document 1).

However, even if the air permeability of the flexible polyurethane foam is improved by using such a catalyst composition, a problem still remains. For example, in a case where the bis(dimethylaminopropyl)methylamine concentration in the catalyst composition comprising pentamethyldiethylenetriamine and bis(dimethylaminopropyl)methylamine is increased to a level of at least about 75 parts by weight, there will be a problem such that the hardness of the flexible polyurethane foam tends to be deficient at the time of its removal from the mold.

As a method to present a polyurethane foam having interconnecting cells and excellent dimensional stability, a method for producing a polyurethane foam has been proposed wherein a polyol component and a polyisocyanate component are reacted in the presence of a catalyst, a blowing agent and an oxazoline-modified organopolysiloxane (e.g. Patent Document 2).

However, even if the air permeability of the polyurethane foam is improved by using such a cell-interconnecting agent, a problem still remains. For example, there will be a problem that the oxazoline-modified organopolysiloxane is solid at normal temperature under normal pressure, whereby an operation to incorporate it to the raw material polyol component tends to be difficult.

As a method to present a polyurethane foam having interconnecting cells and excellent dimensional stability, it is a known technique to use a silicone surfactant which does not stabilize cell membranes. Specifically, a method for producing a polyurethane foam is industrially used wherein the reaction is carried out in the presence of a silicone surfactant having a small molecular weight and having a small foam-stabilizing power (e.g. Non-Patent Document 1).

However, even if the air permeability of a polyurethane foam is improved by using such a surfactant, a problem still remains. For example, there will be a problem that in a case where the above-mentioned silicone surfactant is used in a large amount to improve the air permeability, the cell membranes tend to be too unstable, and a normal foaming state cannot be maintained, whereby the polyurethane foam is likely to collapse, or cells of the polyurethane foam tend to be roughened and a desired performance can hardly be obtainable.

As a method to present a flexible polyurethane foam having interconnecting cells and excellent dimensional stability, it is a known technique to use a cell-opening agent. Specifically, a certain type of a copolymer polyol (particularly one produced by in-situ polymerization of an ethylenically unsaturated monomer in a continuous polyol phase) is an effective cell-opening agent. As another type of a cell-opening agent, a certain type of polyolefin (particularly polybutene) or polybutadiene rubber is known. Further, a polyether having a molecular weight of up to 3,500 and containing a high percentage (usually at least 50%) of oxyethylene units derived from oxidized butylene, is also known as a cell-opening agent. In a case where a flexible polyurethane foam is based on a poly(oxidized propylene)polyol, a polyether type is most commonly employed.

However, these cell-opening agents have a drawback such that their use or effects are limited. For example, in the case of the copolymer polyol, its cell-opening effects are limited unless it is used in a relatively large amount. Accordingly, the main component of an active hydrogencontaining composition to be used for the production of a flexible polyurethane foam is required to be the copolymer polyol. In a case where a polyol other than the copolymer polyol is used in a large amount, it becomes necessary to reduce the amount of the copolymer polyol, whereby the cell-opening effects tend to be inadequate.

Further, many polyolefins and polybutadienes are not so effective and have a drawback that they are discharged from the flexible polyurethane foam, and the surface of the polyurethane foam tends to be oily, and its adhesion or coating on another material tends to be difficult. Further, a polyolefin and a polybutadiene are not compatible with other materials to be used for the production of a flexible polyurethane foam and tend to inhibit incorporation to a polyol or a polyisocyanate blend to be used for the production of a flexible polyurethane foam. Accordingly, a cell-opening agent made of such a polyolefin or polybutadiene is required to be added at the same time as or immediately before the foaming reaction separately to the blend for a flexible polyurethane foam, which makes the operation difficult.

Further, also the polyether having a molecular weight of up to 3,500 and containing a high percentage (usually at least 50%) of oxyethylene units derived from oxidized ethylene, is not compatible with an active hydrogen compound to be used and is likewise not effectively useful.

As a method to present a polyurethane foam having interconnecting cells and excellent dimensional stability, it is a known technique to use a polyether polyol having a high functional value. Specifically, a method for producing a polyurethane foam is industrially used wherein the reaction is carried out in the presence of a polyether polyol having a high functional value, which is based on an initiator or an initiator mixture having at least 4.0 active hydrogen atoms per molecule (e.g. Patent Document 3).

However, even if the air permeability of a polyurethane foam is improved by using such a polyether polyol having a high functional value, a problem still remains. For example, there will be a problem such that such a polyether polyol having a high functional value has a high viscosity, whereby the operation to blend it in the raw material polyol component tends to be difficult. Further, in the case where the above polyether polyol having a high functional value is used in a large amount in order to improve the air permeability, there will be a problem such that the hardness of the obtained polyurethane foam tends to be low, and the desired performance cannot be obtained.
Patent Document 1: JP-A-5-117356
Patent Document 2: JP-A-2000-86739
Patent Document 3: JP-A-2-14210
Non-Patent Document 1: Newest Polyurethane Materials and Applied Technology, First Edition (compiled by Kastuji Mastunaga, published by CMC Publishing Company, p.104-109)

### DISCLOSURE OF THE INVENTION

### TECHNICAL PROBLEMS

The present invention has been made in view of the above problems, and its object is to provide a novel catalyst composition for production of a flexible polyurethane foam, and a method for producing a flexible polyurethane foam by using it.

### MEANS TO SOLVE THE PROBLEMS

The present inventors have conducted an extensive study to solve the above problems. As a result, it has been found that when a blowing catalyst made of a tertiary amine compound and an amine compound containing at least one of a primary amino group and/or a secondary amino group in its molecule, are used in combination as a catalyst composition at the time of producing a flexible polyurethane foam, such a catalyst composition is excellent in the compatibility with the blend liquid of the polyurethane foam materials, and it is possible to obtain a flexible polyurethane foam excellent in air permeability, by its addition in a small amount.

That is, the present invention provides the following:
(1) A catalyst composition for production of a flexible polyurethane foam, which comprises (A) an amine compound of the following formula (1), and (B) an amine compound of the following formula (2) and/or the following formula (3), wherein the weight ratio of (A)/(B) is within a range of from 95/5 to 5/95: 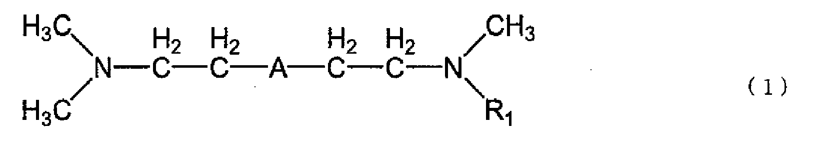 in the above formula (1), A is an oxygen atom or a nitrogen atom to which one methyl group is bonded, and R₁ is a methyl group or a hydroxyethyl group; 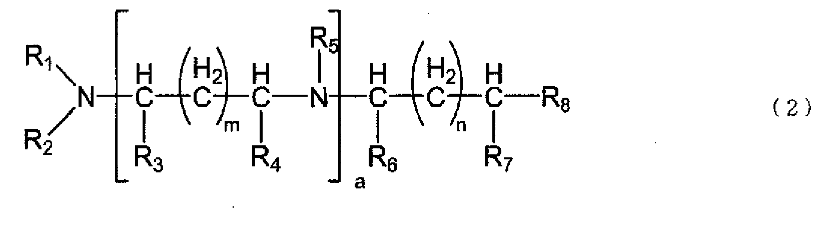 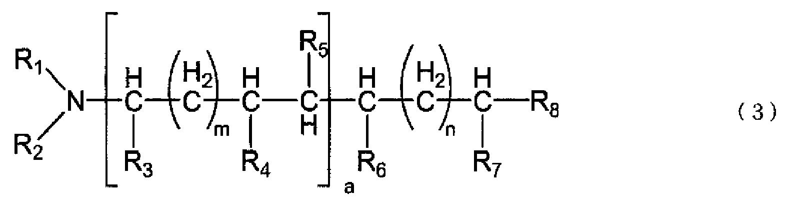 in the above formulae (2) and (3), each of R₁, R₂, R₃, R₄, R₅, R₆ and R₇ which are independent of one another, is a hydrogen atom or a C₁-₆ saturated or unsaturated hydrocarbon group, R₈ is a hydrogen atom, a methyl group, a methoxy group, a hydroxyl group, an amino group, a monomethylamino group, a monoethylamino group or a dimethylamino group, a is an integer of from 1 to 4, and each of m and n which are independent of each other, is an integer of from 0 to 4, provided that when one or more substituents selected from R₁, R₂ and R₅ are not hydrogen atoms, R₈ is an amino group, a monomethylamino group or a monoethylamino group, and any two substituents of from R₁ to R₈ may be optionally bonded via a carbon atom, an oxygen atom or a nitrogen atom to form a hetero ring.
(2) A catalyst composition for production of a flexible polyurethane foam, which comprises (A) an amine compound of the following formula (1), and (C) an amine compound of the following formula (4), wherein the weight ratio of (A)/(C) is within a range of from 95/5 to 5/95: 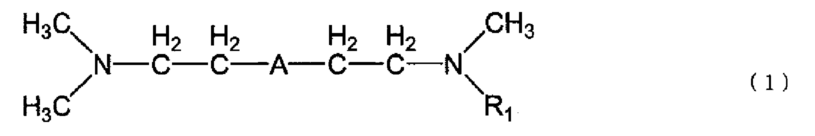 in the above formula (1), A is an oxygen atom or a nitrogen atom to which one methyl group is bonded, and R₁ is a methyl group or a hydroxyethyl group; 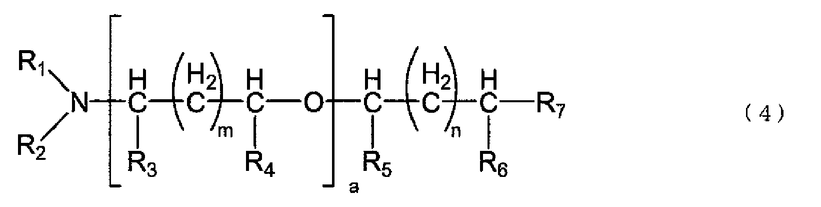 in the above formula (4), each of R₁, R₂, R₃, R₄, R₅ and R₆ which are independent of one another, is a hydrogen atom or a C₁₋₆ saturated or unsaturated hydrocarbon group, R₇ is a hydrogen atom, a methyl group, a methoxy group, a hydroxyl group, an amino group, a monomethylamino group, a monoethylamino group or a dimethylamino group, a is an integer of from 1 to 7, and each of m and n which are independent of each other, is an integer of from 0 to 4, provided that when one or more substituents selected from R₁ and R₂ are not hydrogen atoms, R₇ is an amino group, a monomethylamino group or a monoethylamino group, and any two substituents of from R₁ to R₇ may be optionally bonded via a carbon atom, an oxygen atom or a nitrogen atom to form a hetero ring.
(3) The catalyst composition according to the above (1) or (2), which comprises (A) an amine compound of the above formula (1), (B) an amine compound of the above formula (2) and/or the above formula (3), and (C) an amine compound of the above formula (4), wherein the weight ratio of (A)/{(B) and (C)} is within a range of from 95/5 to 5/95.
(4) The catalyst composition according to any one of the above (1) to (3), wherein the weight ratio of (A)/{(B) and/or (C)} is within a range of from 90/10 to 10/90.
(5) The catalyst composition according to any one of the above (1) to (4), wherein (A) the amine compound of the formula (1) is 1,1,4,7,7-pentamethyldiethylenetriamine.
(6) The catalyst composition according to any one of the above (1) and (3) to (5), wherein (B) the amine compound of the formula (2) and/or the formula (3) is one or more amine compounds selected from the group consisting of 2-(2-aminoethyl)aminoethanol, 2-[2-(2-amino-ethylamino)-ethylamino]-ethanol, 2-(3-aminopropyl)aminoethanol, 2-(6-aminohexyl)aminoethanol, diethylenetriamine, triethylenetetramine, tetraethylenepentamine, pentaethylenehexamine, piperazine, N-(2-aminoethyl)piperazine, N,N'-di(2-aminoethyl)piperazine, 2-(2-aminoethyl)aminoethylpiperazine, pentanediamine, hexanediamine, 3,3'-diaminodipropylamine and 6,6'-diaminodihexylamine.
(7) The catalyst composition according to any one of the above (1) and (3) to (5), wherein (B) the amine compound of the formula (2) is at least one amine compound selected from the group consisting of triethylenetetramine, tetraethylenepentamine and pentaethylenehexamine.
(8) The catalyst composition according to any one of the above (2) to (7), wherein (C) the amine compound of the formula (4) is one ore more amine compounds selected from the group consisting of 2-aminoethoxyethanol, bis(2-amino-ethylamino) ether, polyoxypropylenediamine, polyoxyethylenediamine and polyoxypropylenetriamine.
(9) The catalyst composition according to any one of the above (1) to (8), which further contains triethylenediamine.
(10) A method for producing a flexible polyurethane foam, which comprises reacting a polyol with an organic polyisocyanate in the presence of the catalyst composition as defined in any one of the above (1) to (9).

### ADVANTAGEOUS EFFECT OF INVENTION

The catalyst composition of the present invention is highly effective to make cells of a flexible polyurethane foam to be in an open state. Accordingly, the flexible polyurethane foam produced by using the catalyst composition of the present invention undergoes little shrinkage or deformation and requires no or reduced operation to mechanically open the cells. Further, an additive to open the cells is not required or is reduced.

Further, the catalyst composition of the present invention wherein triethylenetetramine, tetraethylenepentamine or pentaethylene hexamine is used, is not only highly effective to improve the air permeability but also capable of producing a flexible polyurethane foam having an odor reduced during the production of the flexible polyurethane foam.

### BEST MODE FOR CARRYING OUT THE INVENTION

The catalyst composition for production of a flexible polyurethane foam of the present invention includes the following embodiments (I), (II) and (III).
(I): A composition comprising (A) an amine compound of the above formula (1) and (B) an amine compound of the above formula (2) and/or the above formula (3).
(II): A composition comprising (A) an amine compound of the above formula (1), and (C) an amine compound of the above formula (4).
(III): A composition comprising (A) an amine compound of the above formula (1), (B) an amine compound of the above formula (2) and/or the above formula (3), and (C) an amine compound of the above formula (4).
   (A) The amine compound of the above formula (1) is one having two or more tertiary amino groups in its molecule. Specifically, 1,1,4,7,7-pentamethyldiethylenetriamine, bis(2-dimethylaminoethyl)ether or 2-(2-(2-dimethylaminoethoxy)-ethylmethylamino)-ethanol may, for example, be mentioned as a preferred one.
   (B) The amine compound of the above formula (2) and/or the above formula (3) is one having one or more primary amino groups and/or secondary amino groups in its molecule. Specifically, it may, for example, be 3-amino-1-propanol, 4-amino-1-butanol, 5-amino-1-pentanol, 6-amino-1-hexanol, 2-(2-aminoethyl)aminoethanol, 2-[2-(2-amino-ethylamino)-ethylamino]-ethanol, 2-(3-aminopropyl)aminoethanol, 2-(4-aminobutyl)aminoethanol, 2-(5-aminopentyl)aminoethanol, 2-(6-aminohexyl)aminoethanol, 1-(2-hydroxyethyl)piperazine, diethylenetriamine, triethylenetetramine, tetraethylenepentamine, pentaethylenehexamine, 2-dimethylaminoethylamine, 2-diethylaminoethylamine, N,N'-dimethyl-1,2-ethanediamine, N,N'-diethyl-1,2-ethanediamine, N,N-dimethylbutanediamine, N,N-dimethylpentanediamine, N,N-dimethylhexanediamine, piperazine, 1-methylpiperazine, 2-methylpiperazine, 2,5-dimethylpiperazine, 2,6-dimethylpiperazine, N-(2-aminoethyl)piperazine, N,N'-di-(2-aminoethyl)piperazine, 2-(2-aminoethyl)aminoethylpiperazine, pentanediamine, hexanediamine, 3,3'-diaminodipropylamine, 6,6'-diaminodihexylamine, N,N'-bis(3-aminopropyl)propane-1,3-diamine, cyclopentylamine, cyclohexylamine, 3-aminopropyldiethylamine or N-(3-aminopropyl)-imidazole.
      Among them, the amine compound of the formula (2) and/or the formula (3) is more preferably 2-(2-aminoethyl)aminoethanol, 2-[2-(2-amino-ethylamino)-ethylamino]-ethanol, 2-(3-aminopropyl)aminoethanol, 2-(6-aminohexyl)aminoethanol, diethylenetriamine, triethylenetetramine, tetraethylenepentamine, pentaethylenehexamine, piperazine, N-(2-aminoethyl)piperazine, N,N'-di(2-aminoethyl)piperazine, 2-(2-aminoethyl)aminoethylpiperazine, pentanediamine, hexanediamine, 3,3'-diaminodipropylamine or 6,6'-diaminodihexylamine, since the effects to improve the air permeability is thereby high.
      Further, among them, the amine compound of the above formula (2) is particularly preferably triethylenetetramine, tetraethylenepentamine or pentaethylenehexamine, since not only the effects to improve the air permeability is high, but also the obtainable polyurethane foam has little odor.
   (C) The amine compound above formula (4) may, for example, be 2-aminoethoxyethanol, bis-(2-aminoethyl)ether, morpholine or 2-methylmorpholine. Further, it may, for example, be a polyoxypropylenepolyamine having a molecular weight of from 200 to 4,000, obtainable by reacting polypropylene glycol with ammonia at a high temperature under high pressure, a polyoxyethylenepolyamine having a molecular weight from 200 to 4,000, obtainable by reacting polyethylene glycol with ammonia at a high temperature under high pressure, a polyoxyalkylenepolyamine having a molecular weight of from 200 to 4,000, obtainable by reacting glycerin with ammonia at a high temperature under high pressure, or a polyoxyalkylenepolyamine having a molecular weight of from 200 to 4,000, obtainable by reacting trimethylolpropane with ammonia at a high temperature under high pressure.

Among them, 2-aminoethoxyethanol, bis-(2-aminoethyl)ether or a polyoxyalkylenepolyamine having a molecular weight of from 200 to 600, obtainable by reacting polypropylene glycol with ammonia at a high temperature under high pressure is more preferred, since the effect to improve the air permeability is thereby high.

As the above polyoxyalkylenepolyamine, polyoxypropylenediamine, polyoxyethylenediamine or polyoxypropylenetriamine may, for example, be mentioned as a preferred one.

In the catalyst composition of the present invention which comprises (A) an amine compound of the above formula (1) and (B) an amine compound of the above formula (2) and/or the above formula (3), the mixing ratio of (A) to (B) ((A)/(B)) is within a range of from 95/5 to 5/95 (weight ratio), preferably within a range of from 90/10 to 10/90 (weight ratio).

Further, in the catalyst composition of the present invention which comprises (A) the amine compound of the above formula (1), and (C) an amine compound of the above formula (4), the mixing ratio of (A) to (C) ((A)/(C)) is within a range of from 95/5 to 5/95 (weight ratio), preferably within a range of from 90/10 to 10/90 (weight ratio).

Still further, in the catalyst composition of the present invention which comprises (A) a compound of the above formula (1), (B) an amine compound of the above formula (2) and/or the above formula (3), and (C) an amine compound of the above formula (4), the mixing ratio of (A), to (B) and (C) ((A)/{(B) and (C)}) is within a range of from 95/5 to 5/95 (weight ratio), more preferably within a range of from 90/10 to 10/90 (weight ratio).

If (A) an amine compound of the above formula (1) is less than 5 wt%, normal foaming and molding of a flexible polyurethane foam tend to be hardly carried out, or the productivity of a flexible polyurethane foam tends to be extremely deteriorated. On the other hand, if (A) the amine compound of the above formula (1) exceeds 95 wt%, the air permeability of a flexible polyurethane foam tends to be low, whereby moldability tends to be deteriorated such that after the production, shrinkage or deformation is likely to take place. That is, even if (A) the amine compound of the above formula (1), (B) the amine compound of the above formula (2) and/or the formula (3), or (C) the amine compound of the above formula (4) is used alone for the production of a flexible polyurethane foam, the air permeability of the flexible polyurethane foam tends to be low, or the moldability or productivity tends to be deteriorated, whereby the above-mentioned effects of the present invention cannot be accomplished. The above-mentioned effects of the present invention can be accomplished only by a synergistic effect of the combined use of the amine compounds (A), and (B) and/or (C).

The catalyst composition of the present invention has an effect to let cell membranes of a flexible polyurethane foam be interconnecting thereby to improve the air permeability. The flexible polyurethane foam having the air permeability improved is excellent in dimensional stability with little shrinkage after its removal from the mold. That is, with a flexible polyurethane foam product obtained by using the catalyst composition of the present invention, it becomes possible to solve the above-mentioned various problems (e.g. problems of shrinkage or deformation after the production since the interconnection of cells is inadequate). Further, the flexible polyurethane foam obtained by using the catalyst composition of the present invention has interconnection of cells promoted at the same time as the production, whereby an operation to mechanically open the cells after the production will be unnecessary or can be reduced.

The method for producing a flexible polyurethane foam of the present invention is a method which comprises reacting a polyol with an organic polyisocyanate in the presence of the catalyst composition of the present invention and as required, a blowing agent, a surfactant, a cross linking agent, etc.

In the method for forming a flexible polyurethane foam of the present invention, the amount of the catalyst composition of the present invention to be used is not particularly limited, but it is preferably from 0.01 to 10 parts by weight, more preferably from 0.05 to 5 parts by weight, per 100 parts by weight of the polyol to be used. If the catalyst composition of the present invention is used in excess, the productivity of the polyurethane foam may be improved, but the reaction tends to be so quick that closing of the mold may not be done in time, or the amount of a volatile amine remaining in the polyurethane foam is likely to be large.

The polyol to be used for the method for producing a flexible polyurethane foam of the present invention may, for example, be a conventional polyether polyol, polyester polyol or polymer polyol, or an inflammable polyol such as a phosphorus-containing polyol or a halogen-containing polyol. Such polyols may be used alone or in suitable combination as a mixture.

As the polyether polyol, it is possible to use a polyol prepared by using as a starting material a compound having two or more active hydrogen groups, such as a polyhydric alcohol (such as ethylene glycol, propylene glycol, glycerol, trimethylolpropane or pentaerythritol), an amine (such as ethylenediamine) or an alkanolamine (such as ethanolamine or diethanolamine) and carrying out an addition reaction of such a starting material with an alkylene oxide represented by ethylene oxide or propylene oxide (e.g. a method disclosed in Polyurethane Handbook (edited by Gunter Oertel, 1985 edition) p.42-53).

The polyester polyol may, for example, be one obtainable from the reaction of a dibasic acid with glycol, or a polyester polyol obtained by treating a waste from the production of nylon, a waste of TMP or pentaerythritol, a waste or waste product of phthalic acid type polyester (see e.g. Polyurethane Resin Handbook (edited by Keiji Iwata, 1987 first edition) p.117).

The polymer polyol may, for example, be a polymer polyol obtained by reacting e.g. the above-mentioned polyether polyol with an ethylenically unsaturated monomer (such as butadiene, acrylonitrile or styrene) in the presence of a radical polymerization catalyst.

The inflammable polyol may, for example, be a phosphorus-containing polyol obtainable by adding an alkylene oxide to a phosphoric acid compound, a halogen-containing polyol obtainable by ring-opening polymerization of epichlorohydrine or trichlorobutylene oxide or a phenol polyol.

As such a polyol, one having an average molecular weight within a range of from 62 to 15,000 is usually employed. For a flexible polyurethane foam, one having a molecular weight within a range of from 1,000 to 15,000 is used, but preferred is a polyether polyol or a polymer polyol having a molecular weight within a range of from 3,000 to 15,000. In the method of the present invention, it is more preferred to produce the flexible polyurethane foam by using the polyether polyol and the polymer polyol in combination.

The organic polyisocyanate to be used for the method for producing a flexible polyurethane foam of the present invention may be a conventional one and is not particularly limited. It may, for example, be an aromatic polyisocyanate such as toluene diisocyanate (TDI), diphenylmethane diisocyanate (MDI), naphthylene diisocyanate or xylylene diisocyanate, an aliphatic polyisocyanate such as hexamethylene diisocyanate or an alicyclic polyisocyanate such as dicyclohexyl diisocyanate or isophorone diisocyanate, or a mixture thereof.

TDI or its derivative may, for example, be a mixture of 2,4-toluene diisocyanate and 2,6-toluene diisocyanate, or a terminal isocyanate prepolymer derivative of TDI. On the other hand, MDI or its derivative may, for example, be a mixture of MDI and polyphenyl-polymethylene diisocyanate as its polymer and/or diphenylmethane diisocyanate derivative having a terminal isocyanate group. Among such organic polyisocyanates, TDI and MDI are preferably used. For a flexible polyurethane foam, TDI, MDI or a combination thereof is usually used.

The ratio of such an organic polyisocyanate to the polyol to be used is not particularly limited, but when it is represented by an isocyanate index (isocyanate groups/active hydrogen groups reactive with isocyanate groups), it is usually within a range of from 60 to 130 in the production of a flexible polyurethane foam or a semirigid polyurethane foam.

The catalyst composition to be used in the method for producing a flexible polyurethane foam of the present invention is the above-described catalyst composition of the present invention. However, other catalysts may be used in combination within a range not to depart from the present invention. Other catalysts may, for example, be conventional organic metal catalysts, tertiary amines or quaternary ammonium salts.

The organic metal catalysts may be conventional ones and are not particularly limited. For example, stannous diacetate, stannous dioctoate, stannous dioleate, stannous dilaurate, dibutyltin oxide, dibutyltin diacetate, dibutyltin dilaurate, dibutyltin dichloride, dioctyltin dilaurate, lead octanoate, lead naphthenate, nickel naphthenate and cobalt naphthenate may be mentioned.

The tertiary amines may be conventional ones and are not particularly limited. For example, tertiary amine compounds such as N,N,N',N'-tetramethylethylenediamine, N,N,N',N'-tetramethylpropylenediamine, N,N,N',N",N"-pentamethyl-(3-aminopropyl)ethylenediamine, N,N,N',N",N"-pentamethyldipropylenetriamine, N,N,N',N'-tetramethylguanidine, 1,3,5-tris(N,N-dimethylaminopropyl)hexahydro-S-triadine, 1,8-diazabicyclo[5.4.0]unclecene-7, N,N,N',N'-tetramethylhexamethylenediamine, N-methyl-N'-(2-methylaminoethyl)piperazine, N,N'-dimethylpiperazine, dimethyleyclohexylamine, N-methylmorpholine, N-ethylmorpholine, 1-methylimidazole, 1,2-dimethylimidazole, 1-isobutyl-2-methylimidazole, 1-dimethylaminopropylimidazol, dimethylethanolamine, dimethylisopropanolamine, N,N-dimethylhexanolamine, dimethylaminoethoxyethanol, N,N-dimethyl-N'-(2-hydroxyethyl)ethylenediamine, N,N-dimethyl-N'-(2-hydroxyethyl)propanediamine, N-methyl-N'-(2-hydroyxethyl)piperazine, bis(dimethylaminopropyl)isopropanolamine, 1-(2-hydroxyethyl)imidazole, 1-(2-hydroxypropyl)imidazole, 1-(2-hydroxyethyl)-2-methylimidazole, 1-(2-hydroxypropyl)-2-methylimidazole, and 3-quinuclidinole, may be mentioned.

The quaternary ammonium salts may be conventional ones and are not particularly limited. For example, tetraalkylammonium chloride, tetraalkylammonium hydroxides such as tetramethylammonium hydroxide and tetraalkylammonium organic acid salts such as tetramethylammonium 2-ethylhexanoate, 2-hydroxypropyltrimethylammonium formate, and 2-hydroxypropyltrimethylammonium 2-ethylhexanoate, may be mentioned.

Among them, one preferably used in combination with the catalyst composition of the present invention is a tertiary amine compound or an organic metal catalyst. Further, in the production of a flexible polyurethane foam, a combination with triethylenediamine is particularly preferred.

The amount of triethylenediamine to be used as the part of the catalyst composition of the present invention is not particularly limited, but it is usually from 0.05 to 5 parts by weight, preferably from 0.10 to 2 parts by weight, per 100 parts by weight of the polyol to be used.

Further, with respect to the mixing ratio of triethylenediamine to the above-described catalyst composition of the present invention ((A), (B) and/or (C)), triethylenediamine/((A), and {(B) and/or (C)}) (weight ratio) is preferably within a range of from 95/5 to 5/95, more preferably within a range of from 90/10 to 10/90 (weight ratio). Here, if triethylenediamine is less than 5 wt%, the flexible polyurethane foam may not be sufficiently cured after foaming, whereby the productivity of the flexible polyurethane foam is likely to be extremely deteriorated. On the other hand, if triethylenediamine exceeds 95 wt%, the air permeability of the flexible polyurethane foam tends to be low, and shrinkage or deformation is likely to occur after the production, and the moldability is likely to be deteriorated. Further, if triethylenediamine is used excessively, the amount of a volatile amine remaining in the polyurethane foam tends to be large.

In the method for producing a flexible polyurethane foam of the present invention, a blowing agent may be used as the case requires. As the blowing agent to be used in the method of the present invention, water or a low boiling point organic compound may, for example, be mentioned. The low boiling point organic compound may, for example, be a hydrocarbon compound or a halogenated hydrocarbon compound. The hydrocarbon compound may specifically be, for example, methane, ethane, propane, butane, pentane or hexane. The halogenated hydrocarbon compound may, for example, be a halogenated methane, a halogenated ethane or a fluorinated hydrocarbon, and it may specifically be e.g. methylene chloride, HCFC-141 b, HFC-245fa or HFC-356mfc. In the use of such blowing agents, water and low boiling point organic compounds may be used alone or in combination as a mixture.

In the method of the present invention, a particularly preferred blowing agent is water. In the method of the present invention, the amount of the blowing agent to be used varies depending upon the desired density of the product and is not particularly limited, but it is usually preferably within a range of at least 0.1 part by weight, more preferably within a range of from 0.5 to 10 parts by weight, per 100 parts by weight of the polyol.

In the method for producing a flexible polyurethane foam of the present invention, a surfactant may be used as the case requires. The surfactant to be used in the method of the present invention may be a conventional organic silicone type surfactant, and the amount of its use is preferably within a range of from 0.1 to 10 parts by weight per 100 parts by weight of the polyol.

In the present invention, a cross linking agent or a chain extender may be added as the case requires. Such a cross linking agent or chain extender may, for example, be a low molecular weight polyhydric alcohol (such as ethylene glycol, 1,4-butanediol or glycerol) or a low molecular weight amine polyol (such as diethanolamine or triethanolamine). Among them, diethanolamine or triethanolamine is preferred.

In the method of the present invention, a colorant, a flame retardant, an aging-preventive agent, other known additives, etc., may be used as the case requires. The types and amounts of such additives may be selected for use within commonly employed ranges, so long as they do not depart from conventional types or procedures.

Flexible polyurethane foams to be produced by the method of the present invention may be classified into e.g. common slabstock foams, slabstock foams having characteristics such as ultraflexibility, high hardness, high resiliency, etc., and flexible molded foams of hot cure type or cold cure (high resilience foam) type.

### EXAMPLES

Now, the present invention will be described with reference to Examples and Comparative Examples, but it should be understood that the present invention is by no means restricted to such Examples.

### EXAMPLES 1 TO 12 AND COMPARATIVE EXAMPLE 1 TO 8

Examples are shown wherein flexible high resilience polyurethane foams were produced by using the catalyst compositions of the present invention and the catalyst compositions of Comparative Examples.

The compound names and abbreviations of the catalyst components are shown in Table 1.

**TABLE 1**

| Abbreviations of catalyst components | Compound names (product names) |
|---|---|
| TEDA-L33 | Triethylenediamine/dipropylene glycol=33.3/66.7 (weight ratio) |
| | (TEDA-L33, manufactured by TOSOH CORPORATION) |
| PMDETA | 1,1,4,7,7-pentamethyldiethylenetriamine |
| | (TOYOCAT-DT, manufactured by TOSOH CORPORATION) |
| BDMAEE | Bis(2-dimethylaminoethyl)ether/dipropylene glycol=70/30 (weight ratio) |
| | (TOYOCAT-ET, manufactured by TOSOH CORPORATION) |
| AEEA | 2-(2-aminoethyl)aminoethanol (manufactured by TOSOH CORPORATION) |
| HDA | 1,6-hexanediamine (manufactured by Tokyo Chemical Industry Co., Ltd.) |
| DETA | Diethylenetriamine (manufactured by TOSOH CORPORATION) |
| TETA | Triethylenetetramine (manufactured by TOSOH CORPORATION) |
| PIP | Piperazine (manufactured by TOSOH CORPORATION) |
| AEP | N-(2-aminoethyl)piperazine (manufactured by TOSOH CORPORATION) |
| ATPOPD-230 | Polyoxypropylenediamine (JEFFAMINE D-230, manufactured by Huntsman Corporation (molecular weight: about 230)) |
| ATPOPD-400 | Polyoxypropylenediamine (JEFFAMINE D-400, manufactured by Huntsman Corporation (molecular weight: about 400)) |
| BDAPMA | Bis(dimethylaminopropyl)methylamine (Polycat-77, manufactured by Air Products and Chemicals Incorporated) |
| DEOA | Diethanolamine (manufactured by Tokyo Chemical Industry Co., Ltd.) |
| TEPA | Tetraethylenepentamine (TEPA, manufactured by TOSOH CORPORATION) |
| PEHA | Pentaethylenehexamine (PEHA, manufactured by TOSOH CORPORATION) |
| DMAHOH | 6-dimethylamino-1-hexanol (manufactured by Tokyo Chemical Industry Co., Ltd.) |

The polyols, water, cross linking agent and foam-stabilizers were mixed in the raw material blend ratio as shown in Table 2 to prepare a premix A.

**TABLE 2**

| | parts by weight (pbw) |
|---|---|
| Polyol A ¹⁾ | 60 |
| Polyol B ²⁾ | 40 |
| Triethanolamine ³⁾ | 4 |
| Water | 3 |
| Foam stabilizer A ⁴⁾ | 0.4 |
| Foam stabilizer B ⁵⁾ | 0.3 |
| Catalyst | Varied |
| Isocyanate ⁶⁾ | NCO INDEX=105 ⁷⁾ |

| | |
|---|---|
| 1) Polyetherpolyol (hydroxyl value=32.6 mgKOH/g, SANNIX FA-703, manufactured by Sanyo Chemical Industries, Ltd.) 2) Polymerpolyol (hydroxyl value=20.5 mgKOH/g, SANNIX KC-900, manufactured by Sanyo Chemical Industries, Ltd.) 3) Cross linking agent (2,2',2"-nitrilotriethanol, manufactured by Kanto Chemical Co., Ltd.) 4) Silicone type surfactant (SRX 274 C, manufactured by Dow Corning Toray Co., Ltd.) 5) Silicone type surfactant (SZ-1346, manufactured by Dow Corning Toray Co., Ltd.) 6) TDI/MDI=80/20 (weight ratio) mixture TDI: Coronate T-80, manufactured by Nippon Polyurethane Industry Co., Ltd. MDI: Millionate MR-200, manufactured by Nippon Polyurethane Industry Co., Ltd. 7) INDEX=(moles of NCO groups/mols of OH groups)×100 | |

By mixing the respective catalyst components in the blend ratios as identified in Tables 3 to 7, the catalyst compositions of the present invention and the catalyst compositions of Comparative Examples were prepared.

86.2 g of the premix A was put in a 300 ml polyethylene cup, and further, the catalyst composition of the present invention or the catalyst composition in a Comparative Example was added in such an amount that each gel time (as described hereinafter) would be 60 seconds, followed by adjusting the temperature at 25°C. A polyisocyanate liquid (mixture of TDI/MDI=80/20 (weight ratio)) having the temperature adjusted to 25°C in a separate container, was put in the cup of the premix A in such an amount that the isocyanate index (isocyanate groups/OH groups (molar ratio)×100) would be 105, followed by quick stirring at 6,000 rpm for 5 seconds by a stirrer. The mixed liquid having mixed and stirred, was transferred to a polyethylene cup having a capacity of 2 L and adjusted to a temperature of 60°C, and the reactivity (as described hereinafter) in foaming was measured.

Then, the starting materials was scaled up, and by a similar operation, the mixed liquid was put in a mold (made of aluminum with an inner dimension of 35x35x10 cm) adjusted to a temperature of 60°C so that the total density of the foam would be about 45 kg/m³, and a lid was closed, followed by foam molding. The foam was removed from the mold exactly 5 minutes after the mixed liquid was poured. From the obtained foam, the degree of closed cell of foam, the hardness of foam at the time of removal from the mold, the dimensional stability of foam and the total density of foam were measured and compared.

The results are also shown in Tables 3 to 7.

**TABLE 3**

| | Ex. 1 | Ex. 2 | Ex.3 |
|---|---|---|---|
| Amount of catablyst (pbw) | | | |
| TEDA-L33 | 0.43 | 0.43 | 0.43 |
| PMDETA | 0.09 | 0.09 | 0.09 |
| AEEA | 0.09 | | |
| HDA | | 0.09 | |
| DETA | | | 0.09 |
| Reactivity (sec.) | | | |
| Cream time | 11 | 11 | 11 |
| Gel time | 60 | 60 | 60 |
| Rise time | 77 | 76 | 78 |
| Physical property of foam | | | |
| Total density of foam (kg/m³) | 46.1 | 45.0 | 45.1 |
| Degree of closed cell of foam | | | |
| 1 st force to crash after removal from mold (kN/m²) | 10.2 | 9.9 | 9.7 |
| Dimensional stability of foam | | | |
| Upon expiration of 24 hrs after removal from mold | ○ | ○ | ○ |
| Oder of foam | Δ | Δ | ○ |

**TABLE 4**

| | | Ex. 4 | Ex. 5 | Ex. 6 | Ex.8 | Ex. 7 |
|---|---|---|---|---|---|---|
| Amount of Catalyst (pbw) | | | | | | |
| | TEDA-L33 | 0.43 | 0.43 | 0.43 | 0.43 | 0.43 |
| | PMDETA | 0.09 | 0.09 | 0.09 | 0.09 | 0.09 |
| | PIP | | | | 0.09 | |
| | AEP | | | | | 0.09 |
| | TETA | 0.81 | 0.09 | 0.01 | | |
| Reactivity (sec.) | | | | | | |
| | Cream time | 11 | 11 | 11 | 11 | 11 |
| | Gel time | 60 | 60 | 60 | 60 | 60 |
| | Rise time | 78 | 78 | 78 | 77 | 76 |
| Physical property of foam | | | | | | |
| | Total density of foam (kg/m³) | 45.1 | 45.1 | 45.1 | 43.1 | 43.0 |
| Degree of closed cell of foam | | | | | | |
| | 1st force to crash after removal from mold (kN/m²) | 6.7 | 10.2 | 12.5 | 13.9 | 10.1 |
| Dimensional stability of foam | | | | | | |
| | Upon expiration of 24 hrs after removal from mold | ○ | ○ | ○ | ○ | ○ |
| Odor of foam | | ○ | ⊚ | ⊚ | △ | △ |

**TABLE 5**

| | Ex. 9 | Ex. 10 | Ex. 11 | Ex. 12 |
|---|---|---|---|---|
| Amount of Catalyst (pbw) | | | | |
| TEDA-L33 | 0.43 | 0.43 | 0.43 | 0.43 |
| PMDETA | 0.09 | 0.09 | 0.09 | 0.09 |
| ATPOPD-230 | 0.09 | | | |
| ATPOPD-400 | | 0.09 | | |
| TEPA | | | 0.09 | |
| PEHA | | | | 0.09 |

| Reactivity (sec.) | | | | |
|---|---|---|---|---|
| Cream time | 11 | 11 | 11 | 11 |
| Gel time | 60 | 60 | 60 | 60 |
| Rise time | 78 | 79 | 78 | 79 |

| Physical property of foam | | | | |
|---|---|---|---|---|
| Total density of foam (kg/m³) | 43.1 | 43.1 | 43.1 | 43.1 |

| Degree of closed cell of foam | | | | |
|---|---|---|---|---|
| 1 st force to crash after removal from mold (kN/m²) | 10.0 | 10.3 | 9.7 | 9.5 |

| Dimensional stability of foam | | | | |
|---|---|---|---|---|
| Upon expiration of 24 hrs after removal from mold | ○ | ○ | ○ | ○ |
| Odor of foam | △ | △ | ⊚ | ⊚ |

**TABLE 6**

| | Comp. Ex.1 | Comp. Ex. 2 | Comp. Ex. 3 | Comp. Ex. 4 | Comp. Ex. 5 |
|---|---|---|---|---|---|
| Amount of Catalyst (pbw) | | | | | |
| TEDA-L33 | 0.72 | 0.43 | 0.43 | 0.43 | 0.43 |
| PMDETA | | 0.09 | 0.09 | 0.09 | 0.09 |
| BDAPMA | | | 0.09 | | |
| MEA | | | | | 2.91 |
| DEOA | | | | 0.09 | |

| Reactivity (sec.) | | | | | |
|---|---|---|---|---|---|
| Cream time | 12 | 12 | 12 | 10 | 10 |
| Gel time | 60 | 60 | 60 | 60 | Not clear |
| Rise time | 81 | 81 | 81 | 73 | Not clear |

| Physical property of foam | | | | | |
|---|---|---|---|---|---|
| Total density of foam (kg/m³) | 42.5 | 42.5 | 42.5 | 43.9 | Not moldable |

| Degree of closed cell of foam | | | | | |
|---|---|---|---|---|---|
| 1 st force to crash after removal from mold (kN/m²) | 46.2 | 31.8 | 31.1 | 33.7 | Not measurable |

| Dimensional stability of foam | | | | | |
|---|---|---|---|---|---|
| Upon expiration of 24 hrs after removal from mold | × | × | × | × | Not measurable |
| Odor of foam | ⊚ | ⊚ | △ | △ | × |

**TABLE 7**

| | Comp. Ex. 6 | Comp. Ex. 7 | Comp. Ex. 8 |
|---|---|---|---|
| Amount of Catalyst (pbw) | | | |
| TEDA-L33 | 0.43 | 0.28 | |
| BDMAEE | 0.11 | 0.22 | |
| DMAHOH | | | 0.60 |
| TETA | | | 0.15 |

| Reactivity (sec.) | | | |
|---|---|---|---|
| Cream time | 10 | 8 | 10 |
| Gel time | 60 | 60 | 60 |
| Rise time | 73 | Not clear | 76 |

| Physical property of foam | | | |
|---|---|---|---|
| Total density of foam (kg/m³) | 43.9 | Not moldable | 44.0 |

| Degree of closed cell of foam | | | |
|---|---|---|---|
| 1 st force to crash after removal from mold (kN/m²) | 20.9 | Not measurable | 31.9 |

| Dimensional stability of foam | | | |
|---|---|---|---|
| Upon expiration of 24 hrs after removal from mold | △ | Not measurable | × |
| Odor of foam | ○ | × | ⊚ |

The measuring methods for the respective measured items were as follows.
·Measured Items for Reactivity
   Cream time: The time when the foam started to rise was visually measured.
   Gel time: The time when, as the reaction proceeded, the liquid substance changed into a resinous substance was measured.
   Rise time: The time when the rise of the foam stopped, was visually measured.
·Degree of closed cell of Foam: A foam was removed from a mold upon expiration of 5 minutes from the time when the mixed liquid was introduced. Upon expiration of 6 minutes from the time when the mixed liquid was introduced, a 65% compression hardness of the foam was measured by using a disk having a diameter of 20 cm mounted on a tensilon. The hardness (so-called Force to Crash, which is abbreviated as FTC) was recorded. If the cell interconnection of the foam is sufficient, the value of FTC is small. In such a case, the foam is rich in elasticity, and the dimensional change due to shrinkage after removal from the mold is small. On the other hand, if the cell interconnection of the foam is inadequate, and the degree of closed cell is strong, the value of FTC is large. In such a case, the foam is poor in elasticity, and the dimensional change due to shrinkage after removal from the mold, is large.
·Dimensional Stability of Foam: A molded foam was removed from the mold without mechanically compressing and then left to stand at room temperature for 24 hours. Then, shrinkage of the foam was visually observed, and the dimensional stability was evaluated as follows.
   ○: No shrinkage observed, Δ: Shrinkage observed, ×: Remarkable shrinkage observed.
·Odor of Foam: The obtained foam was sealed in a separable flask (1 L) and left to stand in an oven of 40°c for 4 hours, whereupon sensory evaluation (5 grade evaluation) was carried out. The evaluation results are shown by symbols.
   ⊚: Excellent, ○: Good, △: Bad, ×: Extremely bad

As is evident from Examples 1 to 12, with the polyurethane foams prepared by using the catalyst composition of the present invention, the value of FTC is small at a level of less than 15 kN/m², and it is possible to obtain a foam having a small degree of closed cell with cells being interconnecting. In Comparative Example 5, wherein the catalyst composition of the present invention was not used, a foam collapsed during the reaction, and it was not possible to obtain a normal foam.

Examples 4 to 6, 11 and 12 are cases wherein as (B) an amine compound of the above formula (2), triethylenetetramine, tetraethylenepentamine or pentaethylene hexamine was used. In such cases, it is possible to obtain a polyurethane foam having a small degree of closed cell with cells being interconnecting, and in addition, the obtained polyurethane foam had an extremely low odor.

Whereas, in Comparative Examples 1 to 4 and 8 wherein the catalyst composition of the present invention was not used, the value of FTC is as large as more than 30 kN/m², and a foam was obtained which had the degree of closed cell with cells being inadequately interconnecting. Further, in Comparative Examples 1 to 4, the foam shrinks after removal from the mold, and the dimensional change is substantial.

Comparative Examples 6 and 7 are examples wherein the catalyst composition comprises TEDA-L33 and BDMAEE. In the case of Comparative Example 6, FTC of the foam was about 20 kN/m², and as compared with the catalyst composition of the present invention, the degree of closed cell of the foam was strong, and shrinkage was observed. Comparative Example 7 is a case wherein BDMAEE as a blowing catalyst was increased thereby to increase the ratio to TEDA-L33 as a gelling catalyst. In such a case, a foam collapsed during the reaction, and it was not possible to form a normal foam.

Comparative Example 8 is a case wherein a catalyst composition was used which comprised (A) an amine compound other than one represented by the above formula (1) and (B) the amine compound of the above formula (2). In such a case, the value of FTC is as large as more than 30 kN/m², and a foam having the degree of closed cell with cells being inadequately interconnecting, was obtained.

### EXAMPLES 13 TO 15 AND COMPARATIVE EXAMPLES 9 TO 10

Examples are shown wherein flexible polyurethane slabstock foams were produced by using the catalyst compositions of the present invention and the catalyst compositions of Comparative

### Examples.

The compound names and abbreviations of the catalyst components are shown in Table 8.

**TABLE 8**

| Abbreviations of catalyst components | Compound names (product names) |
|---|---|
| PMDETA | 1,1,4,7,7-pentamethyldiethylenetriamine (TOYOCAT-DT, manufactured by TOSOH CORPORATION) |
| TETA | Triethylenetetramine (manufactured by TOSOH CORPORATION) |
| TEPA | Tetraethylenepentamine (TEPA, manufactured by TOSOH CORPORATION) |
| PEHA | Pentaethylenehexamine (PEHA, manufactured by TOSOH CORPORATION) |
| BDAPMA | Bis(dimethylaminopropyl)methylamine (Polycat-77, manufactured by Air Products and Chemicals Incorporated) |
| DEOA | Diethanolamine (manufactured by Tokyo Chemical Industry Co., Ltd.) |

The polyol, water, flame retardant, foam stabilizer, tin 2-ethylhexanoate and catalyst are mixed in the raw material blend ratio as shown in Table 9 to prepare a premix.

**TABLE 9**

| | parts by weight (pbw) |
|---|---|
| Polyol ¹⁾ | 100 |
| Flame retardant ²⁾ | 4.6 |
| Water | 4.3 |
| Foam stabilizer ³⁾ | 1 |
| Stannous 2-ethylhexanoate ⁴⁾ | 0.4 |
| Amine catalyst | Varied |
| Isocyanate ⁵⁾ | NCO INDEX=105 ⁶⁾ |

| | |
|---|---|
| 1) Polyetherpolyol (hydroxyl value=55.9 mgKOH/g, SANNIX GP3000, manufactured by Sanyo Chemical Industries, Ltd.) 2) CR-504L manufactured by DAIHACHI CHEMICAL INDUSTRY CO., LTD. 3) Silicone type surfactant (L580, manufactured by Dow Corning Toray Co., Ltd.) 4) Regent manufactured by by Wako Pure Chemical Industries, Ltd. 5) TDI: Coronate T-80, manufactured by Nippon Polyurethane Industry Co., Ltd. 6) INDEX=(moles of NCO groups/mols of OH groups)×100 | |

The respective catalyst components were mixed in the blend ratio as shown in Table 10 to prepare the catalyst compositions of the present invention and the catalyst compositions of Comparative Examples.

**TABLE 10**

| | Ex. 13 | Ex. 14 | Ex. 15 | Comp. Ex. 9 | Comp. Ex. 10 |
|---|---|---|---|---|---|
| Amount of Catalyst (pbw) | | | | | |
| PMDETA | 0.09 | 0.09 | 0.09 | 0.09 | 0.09 |
| TETA | 0.09 | | | | |
| TEPA | | 0.09 | | | |
| PEHA | | | 0.09 | | |
| BDAPMA | | | | 0.09 | |
| DEOA | | | | | 0.09 |

| Reactivity (sec.) | | | | | |
|---|---|---|---|---|---|
| Cream time | 20 | 20 | 20 | 20 | 20 |
| Rise time | 85 | 86 | 86 | 84 | 86 |

| Physical property of foam | | | | | |
|---|---|---|---|---|---|
| Total density of foam (kg/m³) | 25.5 | 25.4 | 25.6 | 25.7 | 25.6 |
| Air permeability of foam (cm³/(cm²/s)) | 112 | 110 | 109 | 30 | 27 |

268.8 g of the premix was put in a 2 L polyethylene cup, and the catalyst composition of the present invention or the catalyst composition of a Comparative Example was further added in such an amount that its rise time (as described hereinafter) would be 85 seconds, followed by adjusting the temperature to 25°C. A polyisocyanate liquid (TDI) having the temperature adjusted to 25°C in a separate container was put in the cup of the premix in such an amount that the isocyanate index (isocyanate groups/OH groups (molar ratio)×100)) would be 105, followed by quick stirring at 3,000 rpm for 10 seconds by a stirrer. The mixed liquid thus mixed and stirred was transferred to an aluminum box having the top opened and having a capacity of 15.6 L and having the temperature adjusted to 23°C, and the reactivity (as described hereinafter) in foaming was measured.

From a cured foam upon expiration of one day after foaming, the air permeability of the foam and the core density of the foam were measured and compared.
.Measured Items for Reactivity
   Cream time: The time when the foam started to rise was visually measured.
   Rise time: The time when the rise of the foam stopped, was visually measured.
.Air permeability of foam: The foam after the measurement of the core density was cut into a size of 50x50x8 mm in thickness to obtain a test specimen. Then, the air permeability in the thickness direction of the test specimen was measured by using Frazier Permeameter (manufactured by Toyo Seiki Seisaku-Sho, Ltd.). The test method was in accordance with ISO9237, and the measurement was carried out under a set pressure of 125 Pa with a measured area of 5 cm². When interconnection of cells is sufficient, the value of the air permeability is large. On the other hand, if interconnection of cells of the form is inadequate, and the individual cell property is strong, the value of the air permeability is small.

As is evident from Examples 13 to 15, the polyurethane foams prepared by using the catalyst compositions of the present invention have large air permeability values at a level of 100 cm³/(cm²·s) or higher, and highly air permeable foams with cells being interconnecting, were obtained.

Whereas, in Comparative Examples 9 and 10 wherein the catalyst of the present invention was not used, the value of air-permeability is as small as 30 cm³/(cm¹·s) or lower, and foams with the degree of closed cell inadequate in interconnection of cells were obtained.

### INDUSTRIAL APPLICABILITY

A flexible polyurethane foam produced by using the catalyst composition of the present invention is useful for various applications, for example, for seat cushions or head rests for automobiles, aircrafts, special vehicles, construction machines or railway vehicles; cushion materials, backing materials or sound absorbing materials or other interior materials; saddles for motorcycles; chairs, sofas, mattresses or carpet backings for office or household appliances; mattresses or beds for bedding; and other buffer materials, sound insulating materials or cushioning materials.

The entire disclosure of Japanese Patent Application No. 2007-047190 filed on February 27, 2007 including specification, claims and summary are incorporated herein by reference in its entirety.

## Claims

1. A catalyst composition for production of a flexible polyurethane foam, which comprises (A) an amine compound of the following formula (1), and (B) an amine compound of the following formula (2) and/or the following formula (3), wherein the weight ratio of (A)/(B) is within a range of from 95/5 to 5/95: 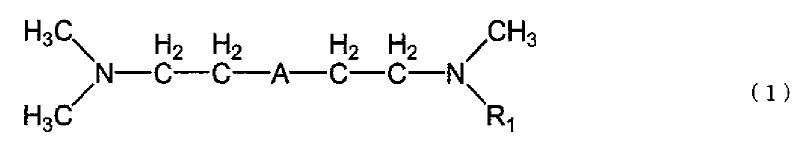 in the above formula (1), A is an oxygen atom or a nitrogen atom to which one methyl group is bonded, and R₁ is a methyl group or a hydroxyethyl group; 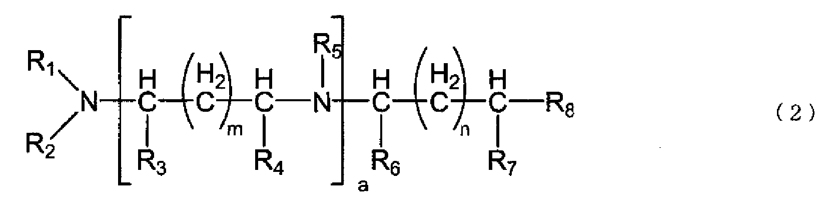 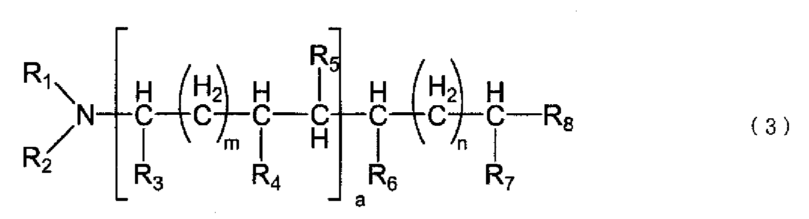 in the above formulae (2) and (3), each of R₁, R₂, R₃, R₄, R₅, R₆ and R₇ which are independent of one another, is a hydrogen atom or a C₁₋₆ saturated or unsaturated hydrocarbon group, R₈ is a hydrogen atom, a methyl group, a methoxy group, a hydroxyl group, an amino group, a monomethylamino group, a monoethylamino group or a dimethylamino group, a is an integer of from 1 to 4, and each of m and n which are independent of each other, is an integer of from 0 to 4, provided that when one or more substituents selected from R₁, R₂ and R₅ are not hydrogen atoms, R₈ is an amino group, a monomethylamino group or a monomethylamino group, and any two substituents of from R₁ to R₈ may be optionally bonded via a carbon atom, an oxygen atom or a nitrogen atom to form a hetero ring.

2. A catalyst composition for production of a flexible polyurethane foam, which comprises (A) an amine compound of the following formula (1), and (C) an amine compound of the following formula (4), wherein the weight ratio of (A)/(C) is within a range of from 95/5 to 5/95: 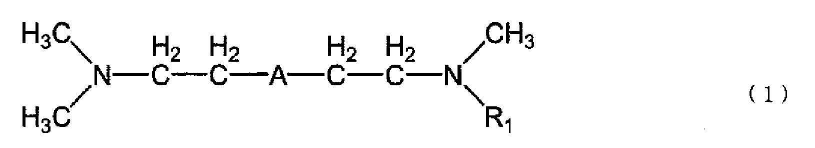 in the above formula (1), A is an oxygen atom or a nitrogen atom to which one methyl group is bonded, and R₁ is a methyl group or a hydroxyethyl group; 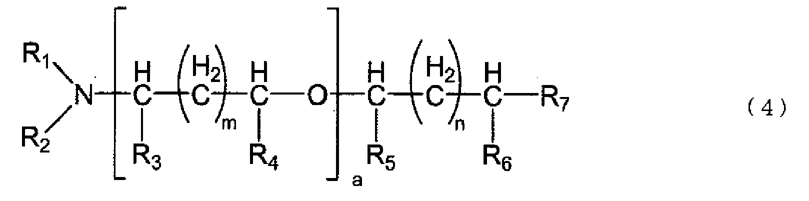 in the above formula (4), each of R₁, R₂, R₃, R₄, R₅ and R₆ which are independent of one another, is a hydrogen atom or a C₁₋₆ saturated or unsaturated hydrocarbon group, R₇ is a hydrogen atom, a methyl group, a methoxy group, a hydroxyl group, an amino group, a monomethylamino group, a monoethylamino group or a dimethylamino group, a is an integer of from 1 to 7, and each of m and n which are independent of each other, is an integer of from 0 to 4, provided that when one or more substituents selected from R₁ and R₂ are not hydrogen atoms, R₇ is an amino group, a monomethylamino group or a monoethylamino group, and any two substituents of from R₁ to R₇ may be optionally bonded via a carbon atom, an oxygen atom or a nitrogen atom to form a hetero ring.

3. A catalyst composition for production of a flexible polyurethane foam, which comprises (A) an amine compound of the following formula (1), (B) an amine compound of the following formula (2) and/or the following formula (3), and (C) an amine compound of the following formula (4), wherein the weight ratio of (A)/{(B) and (C)} is within a range of from 95/5 to 5/95: 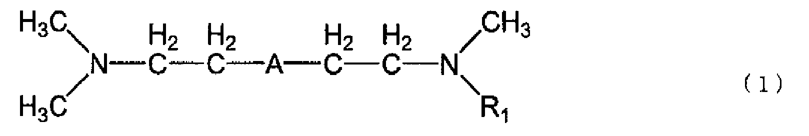 in the above formula (1), A is an oxygen atom or a nitrogen atom to which one methyl group is bonded, and R₁ is a methyl group or a hydroxyethyl group; 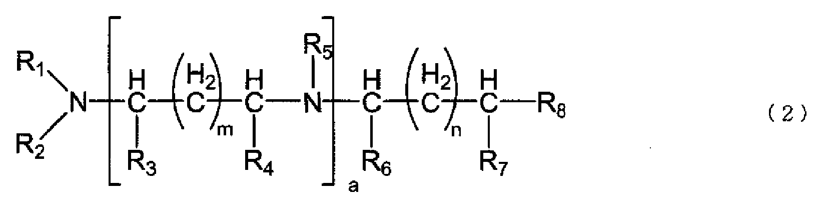 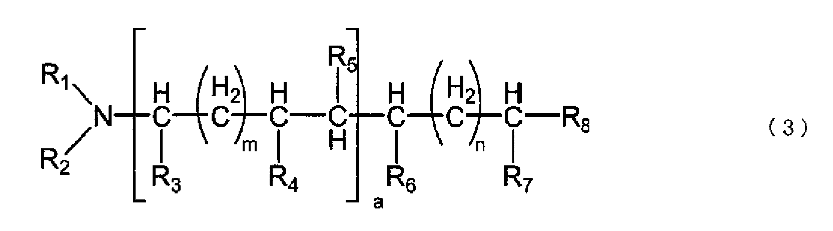 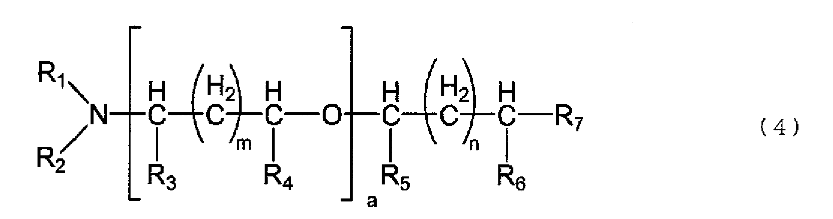 in the above formulae (2) and (3), each of R₁, R₂, R₃, R₄, R₅, R₆ and R₇ which are independent of one another, is a hydrogen atom or a C₁₋₆ saturated or unsaturated hydrocarbon group, R₈ is a hydrogen atom, a methyl group, a methoxy group, a hydroxyl group, an amino group, a monomethylamino group, a monoethylamino group or a dimethylamino group, a is an integer of from 1 to 7, and each of m and n which are independent of each other, is an integer of from 0 to 4, provided that when one or more substituents selected from R₁ R₂ and R₅ are not hydrogen atoms, R₈ is an amino group, a monomethylamino group or a monoethylamino group, and any two substituents of from R₁ to R₈ may be optionally bonded via a carbon atom, an oxygen atom or a nitrogen atom to form a hetero ring, and in the above formula (4), each of R₁, R₂, R₃, R₄, R₅ and R₆ which are independent of one another, is a hydrogen atom or a C₁₋₆ saturated or unsaturated hydrocarbon group, R₇ is a hydrogen atom, a methyl group, a methoxy group, a hydroxyl group, an amino group, a monomethylamino group, a monoethylamino group or a dimethylamino group, a is an integer of from 1 to 7, and each of m and n which are independent of each other, is an integer of from 0 to 4, provided that when one or more substituents selected from R₁ and R₂ are not hydrogen atoms, R₇ is an amino group, a monomethylamino group or a monoethylamino group, and any two substituents of from R₁ to R₇ may be optionally bonded via a carbon atom, an oxygen atom or a nitrogen atom to form a hetero ring.

4. The catalyst composition according to any one of Claims 1 to 3, wherein the weight ratio of (A)/{(B) and/or (C)} is within a range of from 90/10 to 10/90.

5. The catalyst composition according to any one of Claims 1 to 4, wherein (A) the amine compound of the formula (1) is 1,1,4,7,7-pentamethyldiethylenetriamine.

6. The catalyst composition according to any one of Claims 1 and 3 to 5, wherein (B) the amine compound of the formula (2) and/or the formula (3) is one or more amine compounds selected from the group consisting of 2-(2-aminoethyl)aminoethanol, 2-[2-(2-amino-ethylamino)-ethylamino]-ethanol, 2-(3-aminopropyl)aminoethanol, 2-(6-aminohexyl)aminoethanol, diethylenetriamine, triethylenetetramine, tetraethylenepentamine, pentaethylenehexamine, piperazine, N-(2-aminoethyl)piperazine, N,N'-di(2-aminoethyl)piperazine, 2-(2-aminoethyl)aminoethylpiperazine, pentanediamine, hexanediamine, 3,3'-diaminodipropylamine and 6,6'-diaminodihexylamine.

7. The catalyst composition according to any one of Claims 1 and 3 to 5, wherein (B) the amine compound of the formula (2) is at least one amine compound selected from the group consisting of triethylenetetramine, tetraethylenepentamine and pentaethylenehexamine.

8. The catalyst composition according to any one of Claims 2 to 7, wherein (C) the amine compound of the formula (4) is one or more amine compounds selected from the group consisting of 2-aminoethoxyethanol, bis(2-amino-ethylamino) ether, polyoxypropylenediamine, polyoxyethylenediamine and polyoxypropylenetriamine.

9. The catalyst composition according to any one of Claims 1 to 8, which further contains triethylenediamine.

10. A method for producing a flexible polyurethane foam, which comprises reacting a polyol with an organic polyisocyanate in the presence of the catalyst composition as defined in any one of Claims 1 to 9.
